# EUROPEAN PATENT APPLICATION

(11) **EP 2 605 166 A1**
(43) Date of publication of application: **19.06.2013**
(21) Application number: 11306690.6
(22) Date of filing: 16.12.2011
(51) Int. Cl.: G06F 21/00, G07F 7/10

(54) **Method for entering a personal identification code in a device**

(71) Applicant: Gemalto SA, 92190 Meudon (FR)
(72) Inventor: Lombard, Michel, 92190 Meudon (FR); Socie, Stéphane, 92190 Meudon (FR); Benoît, Alexandre, 92190 Meudon (FR)

(57) **Abstract**

The present invention relates to method (M) for entering a personal identification code composed of characters in a device comprising a user graphical interface. Said method is **characterized in that** it comprises the steps of:
- displaying a plurality of reference elements on the device's user graphical interface;
- displaying a plurality of characters on the device's user graphical interface;
- indicating, by means of an audio canal of the device, a reference element to be used for setting a personal identification code's character in correspondence with said reference element; and
- capturing said personal identification code's character which has been positioned by means of said user graphical interface to correspond with said reference element.

## Description

### TECHNICAL FIELD

The present invention relates to a method for entering a personal identification code composed of characters in a device comprising a graphical user interface. The invention also relates to a device for carrying out said method.

Such a method may be used in non-limitative examples in a mobile phone, or in a smart card, or in a personal computer, or in a smart phone.

### BACKGROUND OF THE INVENTION

Methods for entering a personal identification code composed of characters in a device comprising a graphical user interface are well known by the man skilled in the art. Some of these methods use virtual Pin Pads.

For example, for a bank account checking via the website of a bank, a virtual Pin Pad is required so that the personal identification code can be securely entered and encrypted before it is sent to the transaction manager of a bank.

One problem of this state of the art is that detection and analysis of the personal identification code entered by the end user in a secure interface, such as virtual Pin Pad, is done by capturing some graphical zones, for example linked to pointer position, and analyzing these zones using some basic Optical Character Recognition "OCR" techniques to retrieve, one by one, entered characters. The entered personal identification code is so reconstructed from the secure user interface and transmitted back to the attacker.

### SUMMARY OF THE INVENTION

It is an object of the invention to provide a method for entering a personal identification code composed of characters in a device comprising a graphical user interface, which provides a secure entry.

To this end, there is provided a method for entering a personal identification code composed of characters in a device comprising a user graphical interface, wherein said method comprises the steps of:
- displaying a plurality of reference elements on the device's user graphical interface;
- displaying a plurality of characters on the device's user graphical interface;
- indicating, by means of an audio canal of the device, a reference element to be used for setting a personal identification code's character (dp) in correspondence with said reference element; and
- capturing said personal identification code's character which has been positioned by means of said user graphical interface to correspond with said reference element.

As we will see in further details, due to the independent audio canal and due to the correlation between said audio canal and the graphical user interface, the entry of a personal identification code is not attackable using simple graphical capture and optical recognition.

In a first non-limitative embodiment, it comprises a further step of applying a timeout to validate the capturing of the character of said personal identification code. Therefore, a manual confirmation function doesn't need to be implemented.

In a second non-limitative embodiment, the display of the reference elements is randomly performed. It makes an attack more complicated.

In a third non-limitative embodiment, the display of the characters is randomly performed. It makes an attack more complicated.

In a fourth non-limitative embodiment, the indication step is performed by the device.

In a fifth non-limitative embodiment, the indication step is performed by an audio message transmitted to said device by means of said audio canal, said audio message comprising the reference element to be used for setting a personal identification code's character in correspondence with said reference element.

In addition, there is provided a device for entering a personal identification code composed of characters, said device comprising a user graphical interface, **characterized in that** said device comprises a unit processor adapted to:
- display a plurality of reference elements on the device's user graphical interface;
- display a plurality of characters on the device's user graphical interface;
- indicate, by means of an audio canal of the device, a reference element to be used for setting a personal identification code's character in correspondence with said reference element; and
- capture said personal identification code's character which has been positioned by means of said user graphical interface to correspond with said reference element to correspond with said reference element.

In addition, there is provided a computer program product for a computer, comprising a set of instructions, which when loaded into said computer, causes the computer to carry out the method for entering a personal identification code as characterized according to any above characteristics.

### BRIEF DESCRIPTION OF THE FIGURES

Some embodiments of methods and/or apparatus in accordance with embodiments of the present invention are now described, by way of example only, and with reference to the accompanying drawings, in which:
- Fig.1 illustrates a schematic organization chart of the method for entering a personal identification code according to the invention;
- Fig.2 illustrates a first schematic diagram of the method for entering a personal identification code according to a first non-limitative embodiment of the invention;
- Fig.3 illustrates a second schematic diagram of the method for entering a personal identification code according to a second non-limitative embodiment of the invention;
- Fig.4 illustrates schematically a graphical user interface of the device which is adapted to carry out the method of Fig. 1;
- Fig.5 illustrates schematically the graphical user interface of the device of Fig. 5 when a digit of the personal identification code has been positioned in front of a reference symbol; and
- Fig. 6 illustrates schematically a device which is adapted to carry out the method of Fig. 1.

### DESCRIPTION OF EMBODIMENTS OF THE INVENTION

In the following description, well-known functions or constructions by the man skilled in the art are not described in detail since they would obscure the invention in unnecessary detail.

It may be recalled that, in the description, when an action is attributed to a microprocessor, an application or to a device comprising a microprocessor, this action is performed by the microprocessor controlled by instruction codes recorded in a memory of this device.

The present invention relates to a method M for entering a personal identification code PIC composed of characters dp in a device D.

As will be explained hereinafter, the method is based on the concurrence use of:
- a user graphical interface GUI (which may be also called graphical canal) provided by the device's display;
- an instruction provided by the audio output or audio input of the device.

Each character of the personal identification code PIC is chosen by setting a correspondence of a mobile or variant character with a fixed reference element of the displayed interface GUI or vice versa. The reference to the reference element is given for each character in an audio way by the device or by the user of said device. The mobile or variant character is moved or modified by a dedicated element of the interface GUI.

In a non-limitative embodiment, the personal identification code PIC is a Personal Identification Number code, known as PIN code, which is composed of digits. Said PIN code may be used on a smart card, or a mobile phone for examples.

In a non-limitative embodiment, the personal identification code PIC is a password which is composed of alphanumeric characters. Said password may be used on a personal computer, a workstation etc. to access an email box, a network etc.

In non-limitative embodiments, characters comprise alphanumeric characters or digits or letters or numbers, or any other kind of characters, or any combination of the previous characters.

In non-limitative embodiments, reference elements are graphical symbols or characters.

In the following non-limitative example illustrated, the personal identification code PIC is a PIN code and characters of the personal identification code PIC are digits and are mobile, that is to say may be moved in the graphical interface of the device D. Reference elements are graphical symbols and are fixed.

Of course, in other examples, the characters may be fixed and the graphical symbols may be mobile, or both may be mobiles.

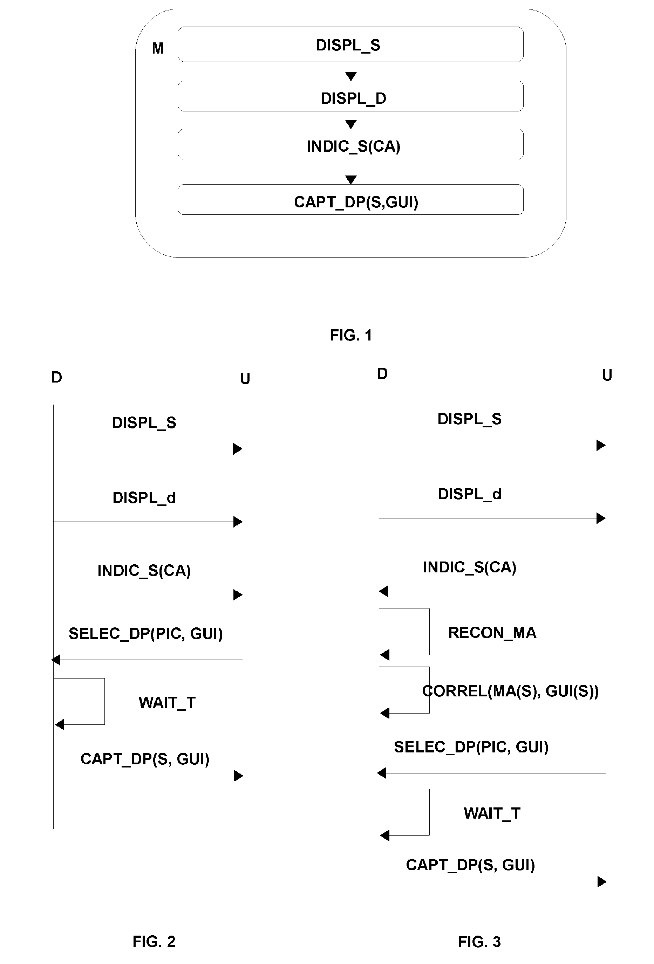

The method will be described hereinafter with reference to the figures 1 to 5. Said method comprises the following steps:
**In a first step)** illustrated DISP_S in Fig. 1, 2 and 3, the device D displays a plurality of reference elements S on its user graphical interface GUI.

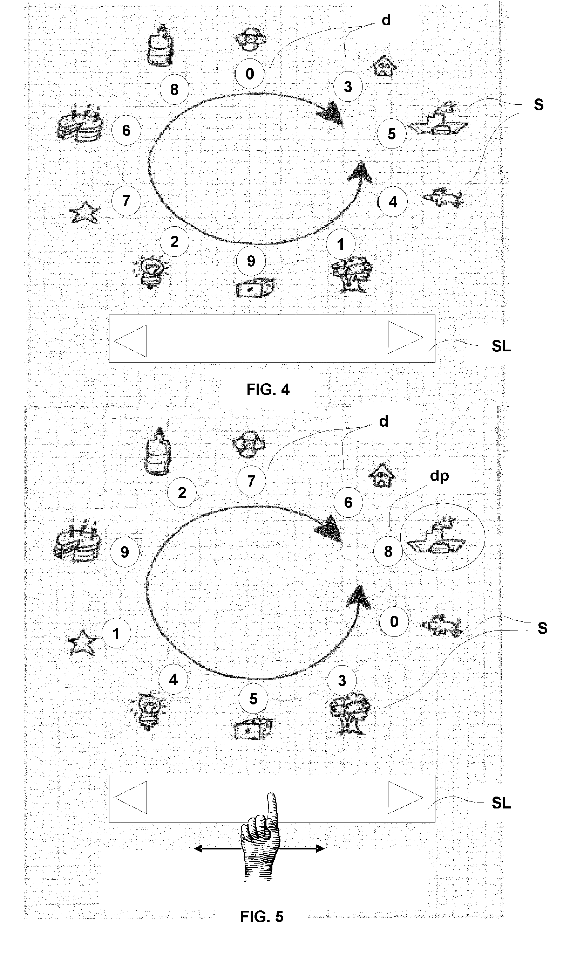

As illustrated in Fig. 4, the reference elements S, which are here reference symbols, are in a non-limitative example displayed according to a layout which is a circle. In the example given, there are ten reference symbols displayed such as a boat, a cake, a flower, a bottle, a tree, a star, a house, a dog, a bulb, a dice.

In a non-limitative embodiment, the display of said reference symbols is randomly performed, that is to say, each time the user graphical interface GUI is launched, the display is performed and this randomly. An OCR analysis will therefore be more complex due to the randomization.

**In a second step)** illustrated DISP_D in Fig. 1, 2 and 3, the device E displays a plurality of characters d on its user graphical interface GUI.

As illustrated in Fig. 4, the characters d are in a non-limitative example display according to a layout, which is a smaller circle than the reference symbols circle. In the example given, there are ten digits d from 0 to 9. In a non-limitative embodiment, the display of said digits d is randomly performed, that is to say each time the user graphical interface GUI is launched, the display is performed and this randomly. An OCR analysis will therefore be more complex due to the randomization.

In the example given, a digit d is displayed in front of each reference symbol already displayed. Said reference symbols served here as landmarks to align the digits.

It is to be noted that these two first steps may be performed in parallel or in the reverse order.

It is to be noted that the layout illustrated is a circle. Of course, in another embodiment, one may imagine to use straight layouts or any other layout.

**In a third step)** illustrated INDIC_S(CA) in Fig. 1, 2 and 3, one indicates, by means of an audio canal CA of the device D, a reference element S to be used for setting a personal identification code's character dp in correspondence with said reference element S.

In a non-limitative embodiment, the indication is performed randomly.

In a first non-limitative embodiment as illustrated in Fig 2, the indication step is performed by the device D itself. This embodiment may be called the output mode. This indication is performed randomly. Hence, when the user wants to enter his PIN code, in a non-limitative example, the reference symbol "boat" will be pronounced by the device D (e.g. via a synthetic voice or a sample), via the audio canal CA as the one to be considered for matching the first digit dp of the PIN code. Another time, when the user wants to enter again his PIN code, the first reference symbol will be another symbol than the "boat" for the first digit dp to be considered. Fig. 2 illustrates the steps of the method for one character of the PIN code.

In a second non-limitative embodiment as illustrated in Fig 3, the indication step is performed by an audio message MA transmitted to said device D by means of said audio canal CA, said audio message MA comprising the reference symbol S to be used for matching a personal identification code's digit dp. This embodiment may be called the input mode. The audio message MA is transmitted via the audio canal CA and is coming from the user U of the device D (illustrated by an arrow in the reverse way than in Fig. 2), said audio canal CA being connected to a speaker SP for example. Instead of being the equipment, it is the user U himself that gives the reference symbols S to be used for the match.

Upon receipt of the audio message MA, the device D processes it by:
- audio recognition of the reference symbol S within said message MA (illustrated RECON_MA). Audio recognition methods are well-known by the man skilled in the art and therefore won't be described here;
- correlation of the audio reference symbol S contained in said audio message MA with a graphical reference symbol of the interface of the device D (illustrated CORREL(MA(S), GUI(S))).

Such correlation may be performed by means of an index table (not illustrated) which comprises the list of the reference symbols displayed on the graphical user interface GUI. The device D creates a link between the reference symbol which has been audio recognized and the index of the corresponding reference symbol in the index table.

It is to be noted that the device may use a dictionary database for the correlation. For example for the graphical reference symbol "boat", audio message containing the term "boat", "ship", "bark", "speedboat", "yacht" may be used, the dictionary database containing such vocabulary.

The Fig. 3 illustrates the steps of the method for one character of the PIN code.

**In a fourth step)** illustrated CAPT_DP(S, GUI) in Fig. 1, 2 and 3, the device D captures said personal identification code's character dp which has been positioned by means of said user graphical interface GUI to correspond with said reference element S.

The first personal identification code's digit dp is submitted by the user U of the device D. In the example illustrated, the digit "8" is chosen (illustrated SELEC_DP(PIC, GUI) in Fig. 2 and Fig. 3).

In a non-limitative embodiment, a digit dp is moved in front of the corresponding reference symbol by means of a dedicated element of the GUI illustrated SL so that the correspondence is carried out. In the non-limitative example illustrated, the element SL is a horizontal slider which permits the user U to rotate with his finger the digits d of the graphical user interface GUI until it reaches the indicated reference symbol S.

In a non-limitative embodiment, the device knows which digit dp is in correspondence with the indicated reference symbol by means of two index tables, a reference symbols index table and a digits index table which are referenced together. When a digit is moved, the relations between the indexes of the digits index table and the indexes of the reference symbols index table vary until the index of the chosen digit dp, here "8" is settled in relation with the indicated reference symbol, here "boat". The device may then capture said digit dp.

Then, the two previous steps are repeated for all the other personal identification code's digits dp.

In a non-limitative embodiment, a timeout T is applied to validate the capturing of the character of said personal identification code PIC (illustrated WAIT_T in Fig. 2 and Fig. 3). In this case, there is no need of further graphical element such an "OK" button to validate the setting of the correspondence by the user. Hence, before the end of the timeout T, the user may move again the digits if for example he moved the wrong digit in front of the reference symbol "boat".

Hence, a PIN code's character has been securely entered.

Then, one may verify said PIN code's character dp according to a referenced character dr, which is usually stored in said device D.

It is to be noted that said verification may be performed as soon as one character dp is set in correspondence with its indicated reference symbol, or after all the characters dp of the PIN code have been chosen. It is to be noted that, as well-known by the man skilled in the art, the device will validate/invalidate the PIN code only after all the characters have been verified. The usual verification algorithms for a PIN code are used. As they are well-known by the man skilled in the art, they won't be described here. The same applied if the personal identification code PIC is a password.

Hence, with this method, one avoids OCR attacks as one combines one GUI and one audio canal to enter said personal identification code, said OCR attacks being therefore inefficient to also spy the audio canal CA.

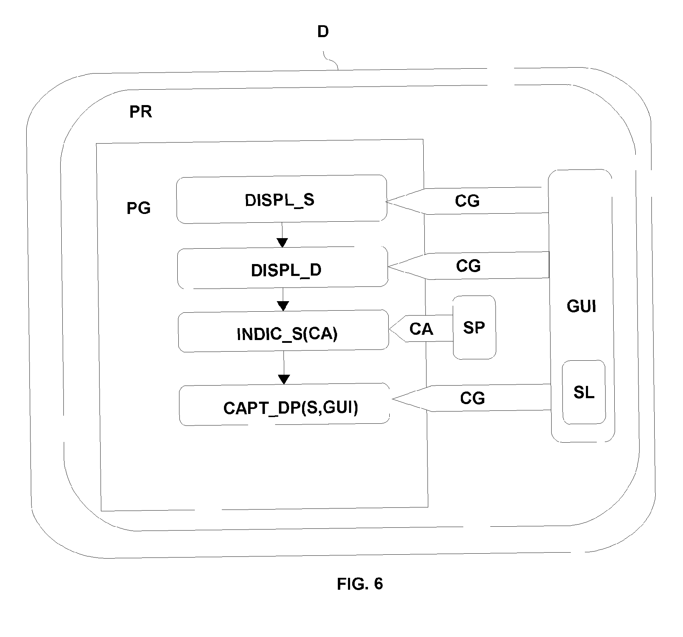

The method M is carried out by a device D as illustrated in Fig. 6. Said device D may be in non-limitative embodiments a personal computer, a smart-phone, a portable tablet, a mobile equipment, a DAB etc.

Said device D comprises a unit processor PR adapted to:
- display a plurality of reference symbols S on the device graphical user interface GUI;
- display a plurality of digits d on the device graphical user interface GUI;
- indicate, by means of an audio canal CA of the device D, a reference symbol S to be used for setting a personal identification code's digit dp in correspondence with said reference symbol S;
- capture said personal identification code's character dp which has been positioned by means of said graphical user interface GUI to correspond with said reference element S.

In a non-limitative embodiment, said unit processor PR is further adapted to verify said personal identification code's digit dp according to a referenced digit dr.

It is to be noted that a unit processor PR may be composed of one or a plurality of processors.

It is to be understood that the present invention is not limited to the aforementioned embodiments. Hence, instead of being mobile and moved by the user, the characters may be variant and modified by the user. For example, with the layout in circle as illustrated in the previous example, the digits may be fixed, and a graphical element SL may be a button which permits to increase the value of each digit until the digit in front of the reference symbol indicated "boat" which has an initial value of "5" attained the value of "8", which is the first digit of the PIN code (the other digits being also increased at the same time).

There are numerous ways of implementing functions of the method M by means of items of hardware or software, or both, provided that a single item of hardware or software can carry out several functions. It does not exclude that an assembly of items of hardware or software or both carry out a function.

Said hardware or software items can be implemented in several manners, such as by means of wired electronic circuits or by means of a computer program product that is suitable programmed respectively. One or a plurality of computer program products PG can be contained in a computer or in the device D as illustrated in Fig. 6, said device comprising a unit processor PR, said unit processor being hardware or software items as above stated.

The computer program product PG comprises a set of instructions. Thus, said set of instructions contained, for example, in a computer programming memory or in a system memory, may cause the computer or the device to carry out the different steps of the method M.

The set of instructions may be loaded into the programming memory by reading a data carrier such as, for example, a disk. A service provider can also make the set of instructions available via a communication network such as, for example, the Internet.

The functions of the various elements shown in the Fig. 6, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, and non volatile storage. Other hardware, conventional and/or custom, may also be included.

Hence, some embodiments of the invention may comprise one or a plurality of the following advantages:
- it is easy to implement;
- it permits to enhance and enforce security by adding an additional and independent canal to spy (i.e. the audio one) and to correlate with other canal (i.e. the graphical one);
- it is not attackable using simple graphical capture and optical recognition;
- it is simply usable, so by anybody and with only one hand;
- it may be implemented in various equipments whatever the input user interface used (e.g. mono or multipoint contact capable displays, mouse, keyboard elements, gyroscope, wheel...).
- It is adaptable to any equipment; and
- it may be automatically adapted with the equipment setup whatever the language used by the device.

## Claims

1. Method (M) for entering a personal identification code (PIC) composed of characters (dp) in a device (D) comprising a user graphical interface (GUI), **characterized in that** said method comprises the steps of:
- displaying a plurality of reference elements (S) on the device's user graphical interface (GUI);
- displaying a plurality of characters (d) on the device's user graphical interface (GUI);
- indicating, by means of an audio canal (CA) of the device (D), a reference element (S) to be used for setting a personal identification code's character (dp) in correspondence with said reference element (S); and
- capturing said personal identification code's character (dp) which has been positioned by means of said user graphical interface (GUI) to correspond with said reference element (S).

2. A method (M) as claimed in claim 1, wherein it comprises a further step of applying a timeout (T) to validate the capturing of the character of said personal identification code (PIC).

3. A method (M) as claimed in claim 1 or claim 2, wherein the display of the reference elements (S) is randomly performed.

4. A method (M) as claimed in any one of the previous claims, wherein the display of the characters (d) is randomly performed.

5. A method (M) as claimed in any one of the previous claims, wherein the indication step is performed by the device (D).

6. A method (M) as claimed in any one of the previous claims 1 to 4, wherein the indication step is performed by an audio message (MA) transmitted to said device (D) by means of said audio canal (CA), said audio message (MA) comprising the reference element (S) to be used for setting a personal identification code's character (dp) in correspondence with said reference element (S).

7. A device (D) for entering a personal identification code (PIC) composed of characters (dp), said device comprising a user graphical interface (GUI), **characterized in that** said device (D) comprises a unit processor (PR) adapted to:
- display a plurality of reference elements (S) on the device's user graphical interface (GUI);
- display a plurality of characters (d) on the device's user graphical interface (GUI);
- indicate, by means of an audio canal (CA) of the device (D), a reference element (S) to be used for setting a personal identification code's character (dp) in correspondence with said reference element (S); and
- capture said personal identification code's character (dp) which has been positioned by means of said user graphical interface (GUI) to correspond with said reference element (S).

8. A computer program product (PG) for a computer, comprising a set of instructions, which when loaded into said computer, causes the computer to carry out the method for entering a personal identification code (PIC) as claimed in any one of claims 1 to 4.
